# EUROPEAN PATENT SPECIFICATION

(11) **EP 4 421 552 B1**
(45) Date of publication and mention of the grant of the patent: **31.12.2025**
(21) Application number: 21965006.6
(22) Date of filing: 23.11.2021
(51) Int. Cl.: G02B 27/01, B60J 1/02, B32B 17/10, C03C 17/36

(54) **HEAD-UP DISPLAY WINDOW, AND VEHICLE**
FAHRZEUGFENSTER MIT HEAD-UP-ANZEIGE UND FAHRZEUG
FENÊTRE DE VÉHICULE D'AFFICHAGE TÊTE HAUTE, ET VÉHICULE

(43) Date of publication of application: 28.08.2024
(73) Proprietor: Fuyao Glass Industry Group Co., Ltd., Fuqing, Fujian 350300 (CN)
(72) Inventor: TSO, Fai, Fujian 350300 (CN); HE, Lishan, Fujian 350300 (CN); ZENG, Dong, Fujian 350300 (CN); HUANG, Fengzhu, Fujian 350300 (CN); CHEN, Guofu, Fujian 350300 (CN); LU, Guoshui, Fujian 350300 (CN); LIN, Gaoqiang, Fujian 350300 (CN); FUKUHARA, Kohta, Fujian 350300 (CN)
(74) Representative: Mewburn Ellis LLP
(86) International application number: PCT/CN2021/132353
(87) International publication number: WO 2023/092262

(56) References cited:
- WO-A1-2019/179683
- CN-A- 101 038 349
- CN-A- 102 231 009
- CN-A- 107 540 212
- CN-A- 113 238 377
- CN-U- 206 219 440
- JP-A- 2006 285 022
- JP-A- 2017 181 915
- US-A1- 2020 309 997

## Description

### TECHNICAL FIELD

The disclosure relates to the technical field of automobiles, and in particular, to a head-up display (HUD) window and a vehicle.

### BACKGROUND

The head-up display (HUD) is applied more and more widely in automobiles. In the related art, a wedge-shaped polyvinyl butyral (PVB) coating is used most widely to achieve an HUD image without ghosting, as seen in patents such as Chinese Patent Application No. 101038349 A and U.S. Patent Application No. 2002172804 A1. However, these technical solutions have the following shortcomings. These technical solutions require a PVB coating of a special description, which is priced 7 to 10 times higher than an ordinary PVB coating, and the technological difficulty is high, resulting in significantly high material and technological costs. Moreover, the applicability is poor, resulting in different PVB coatings specially designed for different vehicle models. Furthermore, the thermal insulation effect is poor, failing to meet the usage requirements of thermal comfort.

WO 2019/179683 A1 relates to a projection arrangement for a head-up display (HUD) including a composite pane having an upper edge, a lower edge, and an HUD region. The composite pane includes an outer pane and an inner pane joined to each other via a thermoplastic intermediate layer. An electrically conductive coating is disposed on a surface of either the outer pane or the inner pane facing the intermediate layer or within the intermediate layer. A projector is aimed at the HUD region. The light emitted by the projector includes at least one p-polarised portion, with the proportion of p-polarised light in the total light ranging from 20% to 80%. The electrically conductive coating exhibits, in the spectral range from 400 nm to 650 nm, only a single local reflection maximum for p-polarised light, with the single local reflection maximum being located within the range from 510 nm to 550 nm.

US 2020/309997 A1 relates to a coated article including a substrate having a first surface and a second surface opposite the first surface, and a functional coating applied over the surface. The functional coating includes a first dielectric layer disposed over at least a portion of the surface, a first metallic layer disposed over at least a portion of the first dielectric layer, a second dielectric layer disposed over at least a portion of the first metallic layer, a second metallic layer disposed over at least a portion of the second dielectric layer, a third dielectric layer disposed over at least a portion of the second metallic layer, a third metallic layer disposed over at least a portion of the third dielectric layer, and a fourth dielectric layer disposed over at least a portion of the third metallic layer. The total combined thickness of the metallic layers is at least 10 nanometers and no more than 60 nanometers.

### SUMMARY

The invention is set out in the appended set of claims.

In summary, the window glass in the disclosure can reflect P-polarized light, thereby achieving an HUD image without ghosting. In addition, the window glass has a visible light transmittance greater than or equal to 70% and a total solar energy transmittance less than or equal to 50%, thereby not only ensuring the safety requirements of driving, but also achieving a good thermal insulation effect of the window glass to meet the usage requirements of thermal comfort. Moreover, the window glass has an aesthetic appearance and even incorporates an electric heating function, thereby meeting the safety driving requirements of defrosting and defogging.

### BRIEF DESCRIPTION OF THE DRAWINGS

In order to describe technical solutions in embodiments of the disclosure or in the related art more clearly, the following will give a brief introduction to accompanying drawings required for describing embodiments or the related art. Apparently, the accompanying drawings hereinafter described merely illustrate some embodiments of the disclosure. Based on these drawings, those of ordinary skill in the art can also obtain other drawings without creative effort.
FIG. 1 is a schematic structural diagram of a head-up display (HUD) window according to an embodiment of the disclosure.
FIG. 2 is a schematic structural diagram of a transparent nano coating according to an embodiment of the disclosure.
FIG. 3 is a schematic structural diagram of a transparent nano coating according to another embodiment of the disclosure.

### DETAILED DESCRIPTION

The following will illustrate clearly and completely technical solutions of embodiments of the disclosure with reference to accompanying drawings of embodiments of the disclosure. Apparently, embodiments illustrated herein are merely some, rather than all embodiments, of the disclosure. Based on the embodiments of the disclosure, all other embodiments obtained by those of ordinary skill in the art without creative effort shall fall within the protection scope of the disclosure.

The disclosure provides a vehicle. The vehicle includes a vehicle body and a head-up display (HUD) window. The window glass is mounted to the vehicle body. A projector is located inside the vehicle body. The HUD window will be described hereinafter.

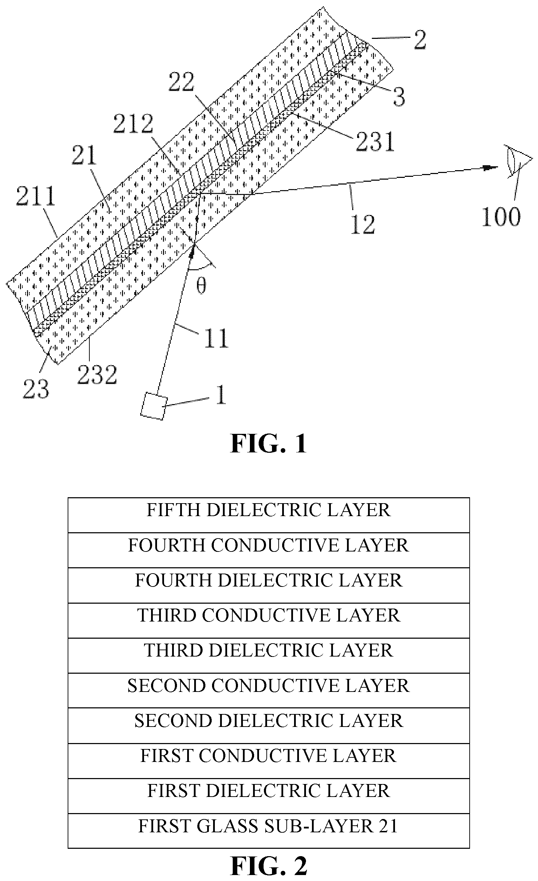

Referring to FIG. 1, the HUD window includes a window glass and a projector 1. The projector 1 is configured to generate and project a projection light ray 11 onto the window glass to form a projection image. A proportion of P-polarized light in the projection light ray 11 is greater than or equal to 70%. The window glass has a reflectivity for the P-polarized light greater than or equal to 5%. The window glass has a visible light transmittance greater than or equal to 70%. The window glass has a total solar energy transmittance less than or equal to 50%. It may be understood that the proportion of P-polarized light in the projection light ray 11 is greater than or equal to 70%, and for example, the proportion of P-polarized light in the projection light ray 11 may be greater than or equal to 90%. A higher proportion of P-polarized light in the projection light ray 11 corresponds to a better suppression of ghosting. Most exemplarily, the proportion of P-polarized light in the projection light ray 11 is equal to 100%, that is, the projection light ray 11 consists entirely of P-polarized light. The projector 1 includes, but is not limited to, a laser, a light-emitting diode (LED), a liquid crystal display (LCD), a digital light processing (DLP), an electroluminescence (EL), a cathode ray tube (CRT), a vacuum fluorescent tube (VFD), a collimating mirror, a spherical correcting mirror, a convex lens, a concave lens, a mirror, and/or a polarizing mirror, etc. A position and an angle of incidence of the projector 1 are adjustable to adapt to different positions and heights as needed. An angle of incidence *θ* of the projection light ray 11 can be any angle ranging from 40° to 75° or an angle range within a range of 40° to 75°. Exemplarily, the angle of incidence *θ* ranges from 50° to 65°. This is more conducive to the use of the Brewster angle effect, thereby better suppressing ghosting.

In the disclosure, by setting the visible light transmittance of the window glass to be greater than or equal to 70% and the total solar energy transmittance to be less than or equal to 50%, not only are the safety requirements of driving ensured, but also the window glass has a good thermal insulation effect, thereby satisfying the usage requirements of thermal comfort.

In an embodiment, the window glass includes a glass layer 2 and a transparent nano coating 3. The transparent nano coating 3 is disposed on the glass layer 2. In order to enable the window glass to achieve an HUD image without ghosting, the transparent nano coating 3 can reflect the P-polarized light in the projection light ray 11 to form a reflected light ray 12, and the reflected light ray 12 may enter the human eye 100 to form the HUD image. A reflectivity of the window glass for P-polarized light incident at an angle of incidence ranging from 40° to 75° is greater than or equal to 5%, exemplarily greater than or equal to 10%, more exemplarily greater than or equal to 11%, further exemplarily greater than or equal to 12%, still further exemplarily greater than or equal to 13%, most exemplarily greater than or equal to 14%.

To achieve as color-neutral a display of the HUD image as possible, in the disclosure, exemplarily, a reflection spectrum curve of the window glass for the incident P-polarized light should be as smooth as possible, and does not have significant local maxima and minima. In a exemplary embodiment, the window glass has a maximum reflectivity *Rmax,* a minimum reflectivity *Rmin,* and an average reflectivity *Ravg* for P-polarized light in a wavelength range of 460 nm ~ 630 nm, and where *Rmax - Ravg* ≤ 5%, and *Ravg - Rmin* ≤ 5%, which also facilitates the design of coatings and the selection of coating materials, and also helps reduce blue light hazard. More exemplarily, *Rmax - Ravg* ≤ 3% and *Ravg - Rmin* ≤ 3%. Most exemplarily, *Rmax - Ravg* ≤ 1% and *Ravg - Rmin* ≤ 1%.

It may be understood that, a ratio of an area of the transparent nano coating 3 to an area of the glass layer 2 is greater than or equal to 70%. That is, more than 70% of the glass layer is covered by the transparent nano coating 3. For example, 80%, 90%, or 95% of the glass layer may be covered by the transparent nano coating 3. Alternatively, the entirely transparent nano coating 3 may be covered by the glass layer 2, that is, 100% of the glass layer is covered by the transparent nano coating 3.

In an embodiment, the transparent nano coating 3 has a thickness ranging 100 nm to 500 nm. In the disclosure, the above-mentioned thickness of the transparent nano coating 3 can not only ensure that the transparent nano coating 3 can withstand high-temperature heat treatment and bending at a temperature of at least 560°C of the window glass without damage, but also ensure that the visible light transmittance of the window glass is greater than or equal to 70%, thereby satisfying the safety requirements of driving.

In an embodiment, the glass layer 2 is a single piece of strengthened glass. The single piece of strengthened glass has an outer surface facing an outside of the vehicle and an inner surface facing an inside of the vehicle. The transparent nano coating 3 is disposed on the inner surface. In this embodiment, the glass layer 2 has a first surface and a second surface opposite the first surface. The first surface faces the outside of the vehicle and serves as an outer surface. The second surface faces the inside of the vehicle and serves as an inner surface. The transparent nano coating 3 is disposed on the second surface. In the case where the window glass is mounted to the vehicle, the single piece of strengthened glass is typically a physically tempered curved glass. Alternatively, the single piece of strengthened glass may also be a chemically tempered curved glass, or may even be an injection-molded polycarbonate (PC) curved glass. The single piece of strengthened glass has a thickness ranging from 2.0 mm to 6.0 mm and a visible light transmittance ranging from 70% to 95%.

In an embodiment, the glass layer 2 is a laminated glass. The glass layer 2 includes a first glass sub-layer 21, a polymer sub-layer 22, and a second glass sub-layer 23. The first glass sub-layer 21, the polymer sub-layer 22, and the second glass sub-layer 23 are sequentially stacked to form the laminated glass. The first glass sub-layer 21 has a first surface 211 and a second surface 212 opposite the first surface 211. The second glass sub-layer 23 has a third surface 231 and a fourth surface 232 opposite the third surface 231. The polymer sub-layer 22 is disposed adjacent to the second surface 212 and the third surface 231. The transparent nano coating 3 is disposed on the second surface 212, at least one surface of the polymer sub-layer 22, the third surface 231, or the fourth surface 232. It may be understood that a visible light transmittance of the laminated glass ranges from 70% to 95%.

It may be understood that the polymer sub-layer 22 is configured to bond the first glass sub-layer 21 and the second glass sub-layer 23 together to form the laminated glass. The polymer sub-layer 22 may be a thermoplastic film sheet. The thermoplastic film sheet may be made from at least one of PC, polyvinyl chloride (PVC), polyvinyl butyral (PVB), ethylene vinyl acetate (EVA), polyacrylate (PA), polymethyl methacrylate (PMMA), a sentry glas plus (SGP), or polyurethane (PU), etc. The thermoplastic film sheet may be a monolayer structure or a multilayer structure, and the multi-layer structure may be a bilayer structure, a triple-layer structure, a quadruple-layer structure, or a quintuple-layer structure. The thermoplastic film sheet may also have other functions, for example, at least one tinted region is provided as a shadow band to reduce sunlight interference to the human eye, an infrared absorber is added for sun protection or heat insulation, an ultraviolet absorber is added for ultraviolet insulation, or one layer in the multilayer structure of the thermoplastic film sheet has a higher content of a plasticizer for sound insulation. The polymer sub-layer 22 may be transparent, such as a transparent PVB. Alternatively, the polymer sub-layer 22 may be colored, such as a gray PVB, or the like.

It may be understood that the polymer sub-layer 22 may be a wedge-shaped intermediate film. That is, the polymer sub-layer 22 has a wedge-shaped cross-section. The wedge-shaped intermediate film is used for correcting a ghost of a reflection image of the transparent nano coating 3 and a reflection image of the first surface 211, the second surface 212, the third surface 231, or the fourth surface 232. A wedge angle *α* ranges from 0.01 mrad to 0.18 mrad. For example, the wedge angle *α* may be 0.05 mrad, 0.10 mrad, 0.15 mrad, 0.18 mrad, etc. Thus, a thermoplastic film sheet with a relatively small wedge angle can be used, so that both reflected ghosting and transmitted ghosting can also be eliminated with low costs, thereby achieving a higher quality HUD image and viewing effect, and eliminating transmitted ghosting caused by objects in the external environment of the vehicle through a windshield.

It may be understood that a thickness of the first glass sub-layer 21 may range from 0.7 mm to 4.0 mm. For example, the thickness of the first glass sub-layer 21 may be 3.5 mm, 3.0 mm, 2.1 mm, 1.8 mm, or 1.6 mm. A thickness of the second glass sub-layer 23 may range from 0.7 mm to 4.0 mm. For example, the thickness of the second glass sub-layer 2 may be 2.1 mm, 1.8 mm, 1.6 mm, 1.1 mm, or 0.7 mm, etc. Exemplarily, the thickness of the second glass sub-layer 23 may be less than the thickness of the first glass sub-layer 21, so that not only the strength requirements of the window glass can be met, but also the lightweight requirements for reducing a thickness of the laminated glass can be met. Optionally, a thickness of the polymer sub-layer 22 ranges from 0.38 mm to 1.5 mm.

The first glass sub-layer 21 and the second glass sub-layer 23 may be one or two of physically tempered glass, chemically tempered glass, or injection-molded PC glass. For example, both the first glass sub-layer 21 and the second glass sub-layer 23 are physically tempered glass, chemically tempered glass, or injection-molded PC glass. Alternatively, one of the first glass sub-layer 21 and the second glass sub-layer 23 is physically tempered glass and the other of the first glass sub-layer 21 and the second glass sub-layer 23 is chemically tempered glass. Alternatively, one of the first glass sub-layer 21 and the second glass sub-layer 23 is physically tempered glass and the other of the first glass sub-layer 21 and the second glass sub-layer 23 is injection-molded PC glass. Alternatively, one of the first glass sub-layer 21 and the second glass sub-layer 23 is chemically tempered glass and the other of the first glass sub-layer 21 and the second glass sub-layer 23 is injection-molded PC glass. In the case where the window glass is mounted to the vehicle, the first glass sub-layer 21 serves as an outer glass plate, the first surface 211 faces the outside of the vehicle, the second glass sub-layer 23 serves as an inner glass plate, and the fourth surface 232 faces the inside of the vehicle. The first glass sub-layer 21 or the second glass sub-layer 23 may be made of transparent glass. Alternatively, the first glass sub-layer 21 or the second glass sub-layer 23 may be made of colored glass, such as green glass, gray glass, etc.

Optionally, the first glass sub-layer 21 may be made of a physically strengthened curved glass plate with a thickness greater than or equal to 1.8mm, which is obtained through, for example, high-temperature heat treatment and bending at a temperature of at least 560°C. The second glass sub-layer 23 may also be made of a physically strengthened curved glass sheet. Alternatively, the second glass sub-layer 23 may also be made of a non-physically strengthened curved glass sheet with a thickness less than or equal to 1.6 mm. The thinner second glass sub-layer 23 can achieve a better HUD effect. Optionally, the thickness of the second glass sub-layer 23 may range from 0.7 mm to 1.2 mm. The non-physically strengthened curved glass sheet may be a chemically strengthened soda-lime-silica glass, a chemically strengthened aluminosilicate glass, a chemically strengthened borosilicate glass, a body strengthened soda-lime-silica glass, a body strengthened aluminosilicate glass, a body strengthened borosilicate glass, or the like. Chemical strengthening is mainly performing ion exchange on a glass surface with ions of different ionic radii, resulting in higher surface stresses on the glass surface and a certain depth of stress layer, thereby improving the mechanical strength of the glass. The body strengthened glass means that neither physical strengthening nor chemical strengthening is required, the original glass sheet itself can directly cooperate with another glass sheet to form a laminated glass, and the quality of the laminated glass meets the standards for automotive laminated glass, for example, GB9656-2016 Automobile Safety Glasses, China.

Optionally, the transparent nano coating 3 may be deposited on the second surface 212. In this way, the transparent nano coating 3 is located between the first glass sub-layer 21 and the polymer sub-layer 22, and thus is not in direct contact with the environment, thereby improving the flexibility of product combination of the laminated glass, and satisfying different requirements of more models. In this embodiment, a functional layer may further be disposed on the fourth surface 232, where the functional layer includes, but is not limited to, an anti-reflective film structure (such as a monolayer anti-reflective film, a bilayer anti-reflective film, a triple-layer anti-reflective film, and a quadruple-layer anti-reflective film), a hydrophilic film structure, a hydrophobic film structure, a P-polarized light enhanced reflection film structure, and the like.

Optionally, the transparent nano coating 3 may also be disposed on at least one surface of the polymer sub-layer 22. For example, the transparent nano coating 3 may be disposed on a surface of the polymer sub-layer 22 facing the first glass sub-layer 21, or on a surface of the polymer sub-layer 22 facing the second glass sub-layer 23.

Optionally, the transparent nano coating 3 may be deposited on the third surface 231. In this way, the transparent nano coating 3 is located between the second glass sub-layer 23 and the polymer sub-layer 22, and thus is not in direct contact with the environment, thereby improving the flexibility of product combination of the laminated glass, and satisfying different requirements of more models.

Optionally, the transparent nano coating 3 is disposed on the fourth surface 232. In this way, the transparent nano coating 3 is deposited on the polyethylene terephthalate (PET). The PET with the transparent nano coating 3 is adhered on the fourth surface 232, and the transparent nano coating 3 is located between the fourth surface 232 and the PET. The projection light ray reaches the transparent nano coating 3 first, so that the reflectivity of the window glass for the projection light ray can be significantly improved.

In an embodiment, the transparent nano coating 3 includes at least five dielectric layers and at least four conductive layers, and the at least five dielectric layers and the at least four conductive layers are alternately stacked. As such, each conductive layer is located between two adjacent dielectric layers, thereby achieving protection of the conductive layer by the dielectric layers. By providing at least four conductive layers, the total solar energy transmittance of the window glass is less than or equal to 50%, so that the window glass can achieve the HUD function, and have a good thermal insulation effect, thereby satisfying the usage requirements of thermal comfort.

The conductive layer is made of at least one of metal or metal alloy, where the metal is at least one of silver (Ag), copper (Cu), gold (Au), platinum (Pt), nickel (Ni), chromium (Cr), titanium (Ti), aluminum (Al), indium (In), zinc (Zn), and tin (Sn), and the metal alloy is made of at least one of Ag, Cu, Au, Pt, Ni, Cr, Ti, Al, In, Zn, or Sn. Optionally, at least one conductive layer in the at least four conductive layers includes at least two conductive sub-layers, thereby improving the environmental resistance of the transparent nano coating 3 and improving the processibility of the window glass. At least one conductive sub-layer in the at least two conductive sub-layers is a silver layer or a silver alloy layer, and the silver content in the silver alloy layer is greater than or equal to 95%. Specifically, for example, one conductive layer in the at least four conductive layers may consist of Ag/Cu/Ag, AgNi/Cr, Ag/AgCu, NiCr/Ag/NiCr, etc.

In an embodiment, as illustrated in FIG. 2, the transparent nano coating 3 includes five dielectric layers and four conductive layers. The five dielectric layers and the four conductive layers are alternately stacked. FIG. 2 illustrates that the transparent nano coating 3 is deposited on the second surface 212 of the first glass sub-layer 21. The five dielectric layers and the four conductive layers are arranged in the following way: a first dielectric layer/a first conductive layer/a second dielectric layer/a second conductive layer/a third dielectric layer/a third conductive layer/a fourth dielectric layer/a fourth conductive layer/a fifth dielectric layer.

In the disclosure, by setting the five dielectric layers and the four conductive layers, the total solar energy transmittance of the window glass provided with the transparent nano coating 3 is less than or equal to 50%, so that an HUD image without ghosting can be achieved, the thermal insulation effect of the window glass can be improved, and the safety driving requirements in terms of the visible light transmittance being greater than or equal to 70% can be satisfied.

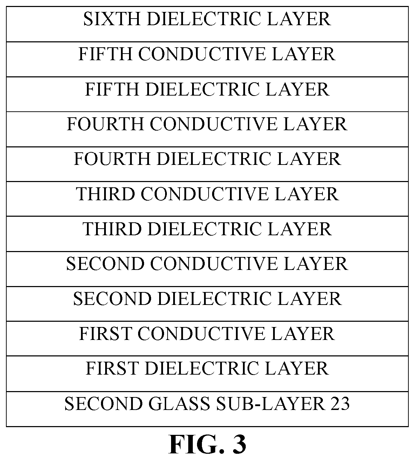

In an embodiment, as illustrated in FIG. 3, the transparent nano coating 3 includes six dielectric layers and five conductive layers. The six dielectric layers and the five conductive layers are alternately stacked. FIG. 3 illustrates that the transparent nano coating 3 is deposited on the third surface 231 of the second glass sub-layer 23. The six dielectric layers and the five conductive layers are arranged in the following way: a first dielectric layer/a first conductive layer/a second dielectric layer/ a second conductive layer/a third dielectric layer/a third conductive layer/a fourth dielectric layer/a fourth conductive layer/a fifth dielectric layer/a fifth conductive layer/a sixth dielectric layer.

In the disclosure, by setting the six dielectric layers and the five conductive layers, the total solar energy transmittance of the window glass provided with the transparent nano coating 3 is less than or equal to 50%, so that an HUD image without ghosting can be achieved, the thermal insulation effect of the window glass can be improved, and the safety driving requirements in terms of the visible light transmittance being greater than or equal to 70% can be satisfied.

In an embodiment, a total thickness of the at least four conductive layers ranges from 25 nm to 40 nm, thereby enabling the transparent nano coating 3 to have good thermal insulation performance and electric heating performance, and ensuring that the visible light transmittance of the window glass is not less than 70%. Optionally, each of at least three conductive layers in the at least four conductive layers has a thickness greater than or equal to 4 nm. For example, in the case where the transparent nano coating 3 includes four conductive layers, each of three conductive layers in the four conductive layers may be set to have a thickness greater than or equal to 4 nm, or alternatively, each of the four conductive layers may be set to have a thickness greater than or equal to 4 nm. For another example, in the case where the transparent nano coating 3 includes five conductive layers, each of three conductive layers in the five conductive layers may be set to have a thickness greater than or equal to 4 nm, or alternatively, each of four conductive layers in the five conductive layers may be set to have a thickness greater than or equal to 4 nm, or alternatively, each of the five conductive layers may be set to have a thickness greater than or equal to 4 nm.

In an embodiment, at least one conductive layer in the at least four conductive layers has a minimum thickness, at least one conductive layer in the at least four conductive layers has a maximum thickness, and the maximum thickness is greater than or equal to twice the minimum thickness. For example, the thickness of a conductive layer having the minimum thickness is 5 nm, and the thickness of a conductive layer having the maximum thickness is 14.9 nm. Optionally, the minimum thickness is greater than or equal to 0.1 times the total thickness of the at least four conductive layers. Optionally, the maximum thickness ranges from 10 nm to 16 nm.

In the disclosure, the dielectric layer is not only used for protecting the conductive layer from being damaged, but also used for adjusting the visible light transmittance and the appearance color of the transparent nano coating 3. Exemplarily, it ensures that the transmitted color of the window glass can be non-yellowish, with *TL(b)* ≤ 5 for the visible light transmitted color. Exemplarily, it also ensures that the visible light reflected color inside the vehicle of the window glass can be non-reddish and non-yellowish, with *R4L(a)* ≤ 4 and *R4L(b)* ≤ 4 for the reflected color inside the vehicle. Whether measured from an inside surface of the window glass or from an outside surface of the window glass, based on the CIE 1976 *L *a*b* * color space, the visible light reflected color of the window glass at normal incidence has an *a** ranging from -10 to 4 and a *b** ranging from -15 to 4. At an angle of incidence of 60°, the visible light reflected color of the window glass has an *a** ranging from -10 to 4 and a *b** ranging from -15 to 4.

In an embodiment, each of at least three dielectric layers in the at least five dielectric layers has a thickness greater than or equal to 50 nm. The dielectric layers can be used for protecting the conductive layers, so that the conductive layers can withstand processing such as bending and pressing above 560°C, have an anti-reflective function, and promote the growth of the conductive layers or avoid (or reduce) oxidation, nitridation, etc., of the conductive layers by reactive gases and/or functional groups during coating processes. The dielectric layer is made from an oxide, a nitride, or an oxynitride, where the oxide includes at least one of Zn, Ti, Si, Al, Sn, Se, Zr, Ni, In, Cr, W, Ca, Y, Nb, Cu, or Sm, the nitride includes at least one of Zn, Ti, Si, Al, Sn, Se, Zr, Ni, In, Cr, W, Ca, Y, Nb, Cu, or Sm, and the oxynitride includes at least one of Zn, Ti, Si, Al, Sn, Se, Zr, Ni, In, Cr, W, Ca, Y, Nb, Cu, or Sm. For example, the dielectric layer may be made from zinc tin oxide (ZnSnOₓ), aluminum-doped zinc oxide (AZO), titanium oxide (TiOₓ), silicon zirconium nitride (SiZrN), silicon aluminum nitride (SiALN), silicon aluminum oxide (SiAlO), or the like. Optionally, at least one dielectric layer in the at least five dielectric layers includes at least two dielectric sub-layers. The at least two dielectric sub-layers may play different roles respectively. Some dielectric sub-layers serve as protective layers (such as, a ZnSnOₓ layer and a SiN layer) to protect the conductive layers and also have the anti-reflective effect. Some dielectric sub-layers serve as promotion layers (such as an AZO layer) to promote the growth of the conductive layers, where the promotion layers are each in direct contact with the conductive layer and are arranged on an upper layer and/or a lower layer of the conductive layer.

It may be understood that the window glass of the disclosure includes the transparent nano coating 3. The transparent nano coating 3 includes at least four conductive layers. The transparent nano coating has a sheet resistance ranging from 0.6 Ω/□ ~ 5 Ω/□, so that the transparent nano coating is suitable for electric heating, thus enabling rapid dehumidifying, defrosting and demisting, and even deicing. Therefore, the window glass of the disclosure can also have an electric heating function, and is suitable for a power supply of 8 V to 48 V. Specifically, the window glass further includes a first bus bar and a second bus bar that are electrically connected to the transparent nano coating 3. The first bus bar and the second bus bar may be electrically connected to two electrodes of a power supply respectively to introduce a current into the transparent nano coating, such that the transparent nano coating can have a heating power density of at least 500 W/m² between the first bus bar and the second bus bar. For example, in the case where the power supply is 48 V and a spacing between the first bus bar and the second bus bar is 0.7 m, a heating power density greater than or equal to 3000 W/m² can be achieved. Each of the first bus bar and the second bus bar may be made of one or more of silver paste, copper foil, and aluminum foil.

Two types of transparent nano coatings 3 will be described in specific structure.

A first type of transparent nano coating 3 is illustrated in FIG. 2, and includes five dielectric layers and four conductive layers. The five dielectric layers (the first dielectric layer, the second dielectric layer, the third dielectric layer, the fourth dielectric layer, and the fifth dielectric layer) and the four conductive layers (the first conductive layer, the second conductive layer, the third conductive layer, and the fourth conductive layer) are arranged in the following way: the first dielectric layer/the first conductive layer/the second dielectric layer/the second conductive layer/the third dielectric layer/the third conductive layer/the fourth dielectric layer/the fourth conductive layer/the fifth dielectric layer.

An example is taken as follows:
the first dielectric layer has a thickness ranging from 35 nm to 60 nm, contains ZnSnOₓ, SiN, AZO, or the like, and is in direct contact with the second surface 212 or the third surface 231;
the first conductive layer has a thickness ranging from 4 nm to 16 nm and contains silver, silver alloy, or the like;
the second dielectric layer has a thickness ranging from 50 nm to 100 nm and contains ZnSnOₓ, SiN, AZO, or the like;
the second conductive layer has a thickness ranging from 4 nm to 9 nm and contains silver, silver alloy, or the like;
the third dielectric layer has a thickness ranging from 50 nm to 100 nm and contains ZnSnOₓ, SiN, AZO, or the like;
the third conductive layer has a thickness ranging from 4 nm to 16 nm and contains silver, silver alloy, or the like;
the fourth dielectric layer has a thickness ranging from 50 nm to 110 nm and contains ZnSnOₓ, SiN, AZO, or the like;
the fourth conductive layer has a thickness ranging from 4 nm to 16 nm and contains silver, silver alloy, or the like;
the fifth dielectric layer has a thickness ranging from 30 nm to 60 nm and contains ZnSnOₓ, SiN, AZO, or the like; and
at least one of the first conductive layer, the third conductive layer, or the fourth conductive layer has a thickness ranging from 10 nm to 16 nm.

A second type of transparent nano coating 3 is illustrated in FIG. 3, and includes six dielectric layers and five conductive layers. The six dielectric layers (a first dielectric layer, a second dielectric layer, a third dielectric layer, a fourth dielectric layer, a fifth dielectric layer, and a sixth dielectric layer) and the five conductive layers (a first conductive layer, a second conductive layer, a third conductive layer, a fourth conductive layer, and a fifth conductive layer) are arranged in the following way: the first dielectric layer/the first conductive layer/the second dielectric layer/the second conductive layer/the third dielectric layer/the third conductive layer/the fourth dielectric layer/the fourth conductive layer/the fifth dielectric layer/the fifth conductive layer/the sixth dielectric layer.

An example is taken as follows:
the first dielectric layer has a thickness ranging from 30 nm to 60 nm, contains ZnSnOₓ, SiN, AZO, or the like, and is in direct contact with the second surface 212 or the third surface 231;
the first conductive layer has a thickness ranging from 4 nm to 16 nm and contains silver, silver alloy, or the like;
the second dielectric layer has a thickness ranging from 60 nm to 120 nm and contains ZnSnOₓ, SiN, AZO, or the like;
the second conductive layer has a thickness ranging from 4 nm to 9 nm and contains silver, silver alloy, or the like;
the third dielectric layer has a thickness ranging from 50 nm to 100 nm and contains ZnSnOₓ, SiN, AZO, or the like;
the third conductive layer has a thickness ranging from 4 nm to 16 nm and contains silver, a silver alloy, or the like;
the fourth dielectric layer has a thickness ranging from 50 nm to 110 nm and contains ZnSnOₓ, SiN, AZO, or the like;
the fourth conductive layer has a thickness ranging from 4 nm to 9 nm and contains silver, silver alloy, or the like;
the fifth dielectric layer has a thickness ranging from 50 nm to 110 nm and contains ZnSnOₓ, SiN, AZO, or the like;
the fifth conductive layer has a thickness ranging from 4 nm to 16 nm and contains silver, silver alloy, or the like;
the sixth dielectric layer has a thickness ranging from 20 nm to 60 nm and contains ZnSnOₓ, SiN, AZO, or the like; and
at least one of the first conductive layer, the third conductive layer, or the fifth conductive layer has a thickness ranging from 10 nm to 16 nm.

### Embodiments

Some embodiments of the disclosure will be further described below, but the disclosure is not limited thereto.

The thickness in the disclosure refers to a physical thickness.

Visible light transmittance TL: calculated according to ISO 9050 measurement at normal incidence, based on illuminant A.

*a**TL(a) of visible light transmitted color: measured at normal incidence, based on the CIE 1976, illuminant D65.

*b** TL(b) of visible light transmitted color: measured at normal incidence, based on the CIE 1976, illuminant D65.

Visible light reflectivity RL: calculated at an angle of incidence of 8° according to ISO 9050 measurements, based on illuminant A.

*a** RL(a) of visible light reflected color: measured at an angle of incidence of 8°, based on the CIE 1976, illuminant D65.

*b** RL(b) of visible light reflected color: measured at an angle of incidence of 8°, based on the CIE 1976, illuminant D65.

Visible light reflectivity R1L of the first surface: calculated at an angle of incidence of 60° according to ISO9050 measurements, based on illuminant A.

*a** R1L(a) of visible light reflected color of the first surface: measured at an angle of incidence of 60°, based on the CIE 1976, illuminant D65.

*b** R1L(b) of visible light reflected color of the first surface: measured at an angle of incidence of 60°, based on the CIE 1976, illuminant D65.

Visible light reflectivity R4L of the fourth surface: calculated at an angle of incidence of 60°, according to ISO9050 measurements, based on illuminant A.

*a** R4L(a) of visible light reflected color of the fourth surface: measured at an angle of incidence of 60°, based on the CIE 1976, illuminant D65.

*b** R4L(b) of visible light reflected color of the fourth surface: measured at an angle of incidence of 60°, based on the CIE 1976, illuminant D65.

P-polarized light reflectivity Rp: calculated at an angle of incidence of 60°, according to ISO9050 measurements.

*a** Rp(a) of P-polarized light reflected color: measured at an angle of incidence of 60°, based on the CIE 1976, illuminant D65.

*b** Rp(b) of P-polarized light reflected color: measured at an angle of incidence of 60°, based on the CIE 1976, illuminant D65.

Reflectivity Rp(460) of P-polarized light of 460 nm, reflectivity Rp(530) of P-polarized light of 530 nm, reflectivity Rp(630) of P-polarized light of 630 nm: measured from the fourth surface at an angle of incidence of 60° with PerkinElmer Lambda 950.

Total solar energy transmittance Tts: calculated according to ISO13837 measurements.

### Comparative example 1 and embodiments 1 to 3

The first glass sub-layer 21, the polymer sub-layer 22, and the second glass sub-layer 23 are prepared, the transparent nano coating 3 is deposited onto the second surface 212 of the first glass sub-layer 21 or the third surface 231 of the second glass sub-layer 23, and the window glass in each of comparative example 1 and embodiment 1 to 3 in table 1 is obtained according to an automobile glass production process.

**Table 1: structure of window glass in each of comparative example 1 and embodiments 1 to 3**

| | comparative example 1 | embodiment 1 | embodiment 2 | embodiment 3 |
|---|---|---|---|---|
| first glass sub-layer | 2.1 mm soda-lime-silica glass | 2.1 mm soda-lime-silica glass | 2.1 mm soda-lime-silica glass | 2.1 mm soda-lime-silica glass |
| polymer sub-layer | 0.76 mm PVB | 0.76 mm PVB | 0.76 mm PVB | 0.76 mm PVB |
| second glass sub-layer | 2.1 mm soda-lime-silica glass | 2.1 mm soda-lime-silica glass | 2.1 mm soda-lime-silica glass | 0.7 mm aluminum-borosilicate glass |
| position of transparent nano coating | third surface | third surface | second surface | third surface |
| first dielectric layer | ZnSnOₓ (20.6 nm) | Si₃N₄ (5.0 nm) | ZnSnOₓ (36.1 nm) | ZnSnBiOₓ (35.1 nm) |
| | | ZnSnOₓ (36.4 nm) | | |
| | AZO (10.0 nm) | AZO (10.0 nm) | AZO (8.0 nm) | AZO (10.0 nm) |
| first conductive layer | NiCr (0.1 nm) | Ag (14.9 nm) | AgCu (5.0 nm) | Ag (5.5 nm) |
| | Ag (6.1 nm) | | | |
| second dielectric layer | AZO (10.0 nm) | AZO (10.0 nm) | AZO (10.0 nm) | AZO (10.0 nm) |
| | ZnSnOₓ (20.0 nm) | ZnSnOₓ (56.5 nm) | ZnSnOₓ (78.1 nm) | SiN (57.4 nm) |
| | AZO (10.0 nm) | AZO (10.0 nm) | AZO (10.0 nm) | AZO (10.0 nm) |
| second conductive layer | NiCr (0.1 nm) | AgNi (8.2 nm) | AgCu (5.7 nm) | Ag (5.0 nm) |
| | Ag (8.5 nm) | | | |
| | AZO (10.0 nm) | AZO (10.0 nm) | AZO (10.0 nm) | AZO (10.0 nm) |
| third dielectric layer | ZnSnOₓ (60.3 nm) | ZnSnMgOₓ (38.2 nm) | ZnSnOₓ (65.8 nm) | ZnSnNiOₓ (48 nm) |
| | AZO (10.0 nm) | AZO (10.0 nm) | AZO (10.0 nm) | AZO (10.0 nm) |
| third conductive layer | NiCr (0.1 nm) | Ag (5.3 nm) | Ag (8.5 nm) | Ag (12.7 nm) |
| | Ag (2.0 nm) | | | |
| fourth dielectric layer | AZO (10.0 nm) | AZO (10.0 nm) | AZO (10.0 nm) | AZO (10.0 nm) |
| | ZnSnOₓ (35.4 nm) | ZnSnOₓ (40.9 nm) | Si₃N₄ (61.7 nm) | ZnSnOₓ (70.5 nm) |
| | AZO (10.0 nm) | AZO (10.0 nm) | AZO (10.0 nm) | AZO (10.0 nm) |
| fourth conductive layer | NiCr (0.1 nm) | Ag (5.0 nm) | Ag (15.1 nm) | Ag (5.0 nm) |
| | Ag (6.1 nm) | | | |
| fifth dielectric layer | AZO (10.0 nm) | AZO (10.0 nm) | AZO (10.0 nm) | AZO (10.0 nm) |
| | ZnSnOₓ (31.8 nm) | ZnSnOₓ (29.1 nm) | Si₃N₄ (46.7 nm) | ZnSnOₓ (30.0 nm) |
| | Si₃N₄ (5.0 nm) | Si₃N₄ (5.0 nm) | | SiN (5.0 nm) |

Optical performance tests are performed for the window glass in each of comparative example 1 and embodiments 1 to 3, and the test results are listed in table 2.

**Table 2: optical performance results of comparative example 1 and embodiments 1 to 3**

| | comparative example 1 | embodiment 1 | embodiment 2 | embodiment 3 |
|---|---|---|---|---|
| visible light transmittance TL | 70.88% | 71.43% | 70.94% | 70.85% |
| TL(a) of visible light transmitted color | -1.99 | 0.22 | -2.35 | -3.51 |
| TL(b) of visible light transmitted color | 7.74 | 3.22 | 2.56 | 3.81 |
| visible light reflectivity RL | 15.42% | 15.26% | 16.91% | 17.92% |
| RL(a) of visible light reflected color | 0.73 | -6.89 | 3.6 | 0.9 |
| RL(b) of visible light reflected color | -3.67 | -1.63 | -0.85 | 1.75 |
| visible light reflectivity R1L of first surface | 20.07% | 19.38% | 21.89% | 23.39% |
| R1L(a) of visible light reflected color of first surface | 1.58 | 0.93 | -2.4 | 0.48 |
| R1L(b) of visible light reflected color of first surface | -0.63 | -2.55 | 1.88 | 2.13 |
| visible light reflectivity R4L of fourth surface | 19.65% | 20.5% | 22.72% | 22.28% |
| R4L(a) of visible light reflected color of fourth surface | 4.58 | 0.98 | 0.26 | 0.89 |
| R4L(b) of visible light reflected color of fourth surface | -3.14 | -0.26 | 3.75 | 3.71 |
| P-polarized light reflectivity Rp | 10.98% | 12.07% | 13.03% | 10.17% |
| Rp(a) of P-polarized light reflected color | 3.9 | -0.69 | -0.38 | -2.62 |
| Rp(b) of P-polarized light reflected color | 0.28 | 2.15 | 5.54 | 0.83 |
| reflectivity Rp(460) of P-polarized light of 460 nm | 10.63% | 10.18% | 12.79% | 10.41% |
| reflectivity Rp(530) of P-polarized light of 530 nm | 10.3% | 12.6% | 12.86% | 10.49% |
| reflectivity Rp(630) of P-polarized light of 630 nm | 12.29% | 12.14% | 15.51% | 9.41% |
| total solar energy transmittance Tts | 51.17% | 41.68% | 43.73% | 46.38% |

As can be seen from table 1 and table 2, each of the comparative example 1 and the embodiments 1 to 3 utilizes a transparent nano coating including four silver layers. In comparative example 1, TL(b) is greater than 7, indicating a noticeable yellowish hue; R4L(a) is greater than 4, indicating a noticeable reddish hue; and Tts is greater than or equal to 50%, indicating poor thermal insulation. Compared with comparative example 1, in embodiments 1 to 3, TL(b) is less than or equal to 4, indicating no yellowish hue; R4L(a) is less than or equal to 1, indicating no reddish hue, and good appearance and reflected color. Additionally, in embodiments 1 to 3, Rp is greater than or equal to 10%, exemplarily Rp is greater than or equal to 12%, and more exemplarily Rp is greater than or equal to 13%; and a difference between any two of Rp (460), Rp (530), and the Rp (630) is less than 3% or even less than 1.5%, indicating good HUD performance and visual effect. In embodiments 1 to 3, the first conductive layer, the third conductive layer, or the fourth conductive layer has a thickness greater than or equal to 10 nm and a Tts less than or equal to 50%, thereby achieving a good thermal insulation effect.

### Comparative example 2 and embodiments 4 to 6

The first glass sub-layer 21, the polymer sub-layer 22, and the second glass sub-layer 23 are prepared, the transparent nano coating 3 is deposited onto the second surface 212 of the first glass sub-layer 21 or a third surface 231 of the second glass sub-layer 23, and the window glass in each of comparative example 2 and embodiments 4 to 6 in table 3 is obtained according to an automobile glass production process.

**Table 3: structure of window glass in each of comparative example 2 and embodiments 4 to 6**

| | comparative example 2 | embodiment 4 | embodiment 5 | embodiment 6 |
|---|---|---|---|---|
| first glass sub-layer | 2.1 mm soda-lime-silica glass | 2.1 mm soda-lime-silica glass | 2.1 mm soda-lime-silica glass | 2.1 mm soda-lime-silica glass |
| polymer sub-layer | 0.76 mm PVB | 0.76 mm PVB | 0.76 mm PVB | 0.76 mm PVB |
| second glass sub-layer | 2.1 mm soda-lime-silica glass | 2.1 mm soda-lime-silica glass | 2.1 mm soda-lime-silica glass | 1.1 mm soda-lime-silica glass |
| position of transparent nano coating | second surface | second surface | third surface | third surface |
| first dielectric layer | SiN (5.0 nm) | SiN (5.0 nm) | SiN (5.0 nm) | SiN (5.0 nm) |
| | ZnSnOₓ (28.6 nm) | ZnSnOₓ (25.7 nm) | ZnSnOₓ (28.7 nm) | ZnSnMgₓ (30.2 nm) |
| | AZO (10.0 nm) | AZO (10.0 nm) | AZO (10.0 nm) | AZO (10.0 nm) |

| first conductive layer | Ag (13.6 nm) | Ag (13.1 nm) | Ag (12.7 nm) | Ag (5.0 nm) |
|---|---|---|---|---|
| second dielectric layer | AZO (10.0 nm) | ZnO (10.0 nm) | AZO (10.0 nm) | ZnO (10.0 nm) |
| | ZnSnOₓ (50.6 nm) | ZnSnOₓ (63.0 nm) | ZnSnOₓ (63.0 nm) | ZnSnOₓ (63.0 nm) |
| | AZO (10.0 nm) | AZO (10.0 nm) | AZO (10.0 nm) | AZO (10.0 nm) |
| second conductive layer | Ag (15.0 nm) | Ag (5.0 nm) | Ag (5.0 nm) | Ag (5.4 nm) |
| third dielectric layer | AZO (10.0 nm) | ZnO (10.0 nm) | AZO (10.0 nm) | ZnO (10.0 nm) |
| | ZnSnOₓ (45.9 nm) | ZnSnOₓ (49.5 nm) | ZnSnOₓ (48.3 nm) | ZnSnOₓ (52.2 nm) |
| | AZO (10.0 nm) | AZO (10.0 nm) | AZO (10.0 nm) | AZO (10.0 nm) |
| third conductive layer | Ag (5.8 nm) | Ag (5.0 nm) | Ag (5.2 nm) | Ag (5.4 nm) |
| fourth dielectric layer | AZO (10.0 nm) | ZnO (10.0 nm) | AZO (10.0 nm) | ZnO (10.0 nm) |
| | ZnSnOₓ (65.7 nm) | ZnSnOₓ (66.5 nm) | ZnSnOₓ (52.2 nm) | ZnSnOₓ (48.0 nm) |
| | AZO (10.0 nm) | AZO (10.0 nm) | AZO (10.0 nm) | AZO (10.0 nm) |
| fourth conductive layer | Ag (2.2 nm) | Ag (5.0 nm) | Ag (5.0 nm) | Ag (4.9 nm) |
| fifth dielectric layer | AZO (10.0 nm) | ZnO (10.0 nm) | AZO (10.0 nm) | ZnO (10.0 nm) |
| | ZnSnOₓ (29.0 nm) | ZnSnOₓ (62.3 nm) | ZnSnOₓ (52.1 nm) | ZnSnOₓ (65.0 nm) |
| | AZO (10.0 nm) | AZO (10.0 nm) | AZO (10.0 nm) | AZO (10.0 nm) |
| fifth conductive layer | Ag (2.1 nm) | Ag (5.0 nm) | Ag (4.5 nm) | Ag (12.5 nm) |
| sixth dielectric layer | AZO (10.0 nm) | AZO (13.0 nm) | AZO (10.0 nm) | AZO (8.0 nm) |
| | ZnSnOₓ (23.6 nm) | SiN (25.6 nm) | ZnSnOₓ (25.6 nm) | ZnSnOₓ (23.6 nm) |
| | ZrN (5.0 nm) | | SiZrN (5.0 nm) | SiZrN (8.0 nm) |

Optical performance tests are performed for the window glass in each of comparative example 2 and embodiments 4 to 6, and the test results are listed in table 4.

**Table 4: optical performance results of comparative example 2 and embodiments 4 to 6**

| | comparative example 2 | embodiment 4 | embodiment 5 | embodiment 6 |
|---|---|---|---|---|
| visible light transmittance TL | 70.29% | 71.45% | 71% | 70.5% |
| TL(a) of visible light transmitted color | -2.54 | -0.33 | -2.1 | -2.31 |
| TL(b) of visible light transmitted color | 9.57 | 3.01 | 3.95 | 3.88 |
| visible light reflectivity RL | 16.69% | 14.94% | 14.73% | 16.82% |
| RL(a) of visible light reflected color | -1.86 | -8.11 | -1.46 | -1.04 |
| RL(b) of visible light reflected color | -11.58 | 1.78 | 1.22 | 2.06 |
| visible light reflectivity R1L of first surface | 21.41% | 18.82% | 20.39% | 22.48% |
| R1L(a) of visible light reflected color of first surface | 2.38 | 2.46 | *0.55* | 2.23 |
| R1L(b) of visible light reflected color of first surface | -8.5 | -4.53 | 0.67 | 0.73 |
| visible light reflectivity R4L of fourth surface | 22% | 18% | 22.05% | 20.77% |
| R4L(a) of visible light reflected color of fourth surface | 2.77 | 1.26 | 1.62 | *1.55* |
| R4L(b) of visible light reflected color of fourth surface | -5.7 | -1.5 | 0.54 | 1.1 |
| P-polarized light reflectivity Rp | 11.67% | 14.42% | 11.91% | 10.31% |
| Rp(a) of P-polarized light reflected color | 2.19 | 0.02 | -2.16 | -1.8 |
| Rp(b) of P-polarized light reflected color | -11.93 | 2.56 | 1.08 | 1.74 |
| reflectivity Rp(460) of P-polarized light of 460 nm | 18.6% | 14.02% | 11.9% | 9.31% |
| reflectivity Rp(530) of P-polarized light of 530 nm | 11.43% | 14.03% | 12.39% | 10.5% |
| reflectivity Rp(630) of P-polarized light of 630 nm | 11.82% | 14.05% | 11.89% | 9.93% |
| total solar energy transmittance Tts | 45.61% | 49.02% | 49.99% | 48.04% |

As can be seen from table 3 and table 4, each of comparative example 2 and embodiments 4 to 6 utilizes a transparent nano coating including five silver layers. In comparative example 2, although both R4L(a) and Tts are improved, TL(b) is greater than 9, indicating a noticeable yellowish hue, both a difference between Rp(460) and Rp(530) and a difference between Rp(460) and Rp(630) are greater than 6%, adversely affecting the visual effect of HUD. Compared with comparative example 2, in embodiments 4 to 6, TL (b) is less than or equal to 4, indicating no yellowish hue and achieving good appearance. Additionally, in embodiments 4 to 6, Rp is greater than or equal to 10%, exemplarily Rp is greater than or equal to 11%, and more exemplarily Rp is greater than or equal to 14%; and a difference between any two of Rp (460), Rp (530), and Rp (630) is less than 2% or even less than 0.5%, indicating good HUD performance and visual effect. In embodiments 4 to 6, the first conductive layer or the fifth conductive layer has a thickness greater than or equal to 10 nm and a Tts less than or equal to 50%, thereby achieving a good thermal insulation effect.

## Claims

1. A head-up display, HUD, window, comprising a window glass and a projector (1), wherein
the window glass comprises a glass layer (2) and a transparent nano coating (3), the transparent nano coating (3) is disposed on the glass layer (2), and the projector (1) is configured to generate and project a projection light ray (11) onto the window glass to form a projection image;
a proportion of P-polarized light in the projection light ray (11) is greater than or equal to 70%, and the transparent nano coating (3) is capable of reflecting at least part of the P-polarized light incident on the window glass;
the window glass has a visible light transmittance greater than or equal to 70%, and the window glass has a total solar energy transmittance less than or equal to 50%;
the projection light ray (11) is projected onto the window glass at an angle of incidence ranging from 40° to 75°, and the window glass has a reflectivity for the P-polarized light greater than or equal to 10%; **characterized in that**
a difference between any two of Rp(460), Rp(530), and Rp(630) is less than 3%, wherein Rp(460) represents a reflectivity of the window glass for P-polarized light of 460 nm, Rp(530) represents a reflectivity of the window glass for P-polarized light of 530 nm, and Rp(630) represents a reflectivity of the window glass for P-polarized light of 630 nm.

2. The HUD window of claim 1, wherein the transparent nano coating (3) has a thickness ranging from 100 nm to 500 nm.

3. The HUD window of claim 1, wherein a ratio of an area of the transparent nano coating (3) to an area of the glass layer (2) is greater than or equal to 70%.

4. The HUD window of claim 1, wherein the transparent nano coating (3) comprises at least five dielectric layers and at least four conductive layers, and the at least five dielectric layers and the at least four conductive layers are alternately stacked, wherein each of the at least four conductive layers is sandwiched between two adjacent dielectric layers of the at least five dielectric layers.

5. The HUD window of claim 4, wherein
a total thickness of the at least four conductive layers ranges from 25 nm to 40 nm;
the conductive layer is made of at least one of metal or metal alloy; and
the metal is at least one of silver (Ag), copper (Cu), gold (Au), platinum (Pt), nickel (Ni), chromium (Cr), titanium (Ti), aluminum (Al), indium (In), zinc (Zn), or tin (Sn), and the metal alloy is made of at least one of Ag, Cu, Au, Pt, Ni, Cr, Ti, Al, In, Zn, or Sn.

6. The HUD window of claim 4, wherein each of at least three conductive layers in the at least four conductive layers has a thickness greater than or equal to 4 nm.

7. The HUD window of claim 4, wherein at least one conductive layer in the at least four conductive layers has a minimum thickness, at least one conductive layer in the at least four conductive layers has a maximum thickness, and the maximum thickness is greater than or equal to twice the minimum thickness.

8. The HUD window of claim 7, wherein the minimum thickness is greater than or equal to 0.1 times a total thickness of the at least four conductive layers.

9. The HUD window of claim 7, wherein the maximum thickness ranges from 10 nm to 16 nm.

10. The HUD window of claim 4, wherein each of at least three dielectric layers in the at least five dielectric layers has a thickness of greater than or equal to 50 nm.

11. The HUD window of claim 1, wherein the window glass has a maximum reflectivity *Rmax, a* minimum reflectivity *Rmin,* and an average reflectivity *Ravg* for P-polarized light in a wavelength range of 460 nm ~ 630 nm, wherein *Rmax - Ravg* ≤ 5%, and *Ravg - Rmin* ≤ *5%.*

12. The HUD window of claim 1, wherein the window glass further comprises a first bus bar and a second bus bar that are both electrically connected to the transparent nano coating (3), and the transparent nano coating (3) has a heating power density of at least 500 W/m² between the first bus bar and the second bus bar.

13. The HUD window of claim 5, wherein
the transparent nano coating (3) comprises five dielectric layers and four conductive layers, wherein the five dielectric layers and the four conductive layers are arranged in the following way: one first dielectric layer, one first conductive layer, one second dielectric layer, one second conductive layer, one third dielectric layer, one third conductive layer, one fourth dielectric layer, one fourth conductive layer, and one fifth dielectric layer are stacked in sequence; and
at least one of the first conductive layer, the third conductive layer, or the fourth conductive layer has a thickness ranging from 10 nm to 16 nm.

14. The HUD window of claim 5, wherein
the transparent nano coating (3) comprises six dielectric layers and five conductive layers, the six dielectric layers and the five conductive layers are arranged in the following way: one first dielectric layer, one first conductive layer, one second dielectric layer, one second conductive layer, one third dielectric layer, one third conductive layer, one fourth dielectric layer, one fourth conductive layer, one fifth dielectric layer, one fifth conductive layer, and one sixth dielectric layer are stacked in sequence; and
at least one of the first conductive layer, the third conductive layer, or the fifth conductive layer has a thickness ranging from 10 nm to 16 nm.

15. A vehicle, comprising a vehicle body and the HUD window of any one of claims 1 to 14, wherein the window glass is mounted to the vehicle body, and the projector (1) is located inside the vehicle body.

## Patentansprüche

1. Head-up-Display-, HUD-, Scheibe, umfassend eine Glasscheibe und einen Projektor (1), wobei die Glasscheibe eine Glasschicht (2) und eine transparente Nanobeschichtung (3) umfasst, wobei die transparente Nanobeschichtung (3) auf der Glasschicht (2) angeordnet ist und der Projektor (1) ausgelegt ist, um einen Projektionslichtstrahl (11) zu erzeugen und auf die Glasscheibe zu projizieren, um ein Projektionsbild auszubilden;
ein Anteil von P-polarisiertem Licht in dem Projektionslichtstrahl (11) größer oder gleich 70 % ist und die transparente Nanobeschichtung (3) dazu in der Lage ist, zumindest einen Teil des P-polarisierten Lichts, das auf die Glasscheibe auftrifft, zu reflektieren;
wobei die Glasscheibe einen sichtbaren Lichttransmissionsgrad von größer oder gleich 70 % aufweist und die Glasscheibe einen Solarenergie-Gesamttransmissionsgrad von kleiner oder gleich 50 % aufweist;
wobei der Projektionslichtstrahl (11) in einem Einfallswinkel im Bereich von 40° bis 75° auf die Glasscheibe projiziert wird, und die Glasscheibe einen Reflexionsgrad für das P-polarisierte Licht von größer oder gleich 10 % aufweist; **dadurch gekennzeichnet, dass**
eine Differenz zwischen beliebigen zweien aus Rp(460), Rp(530) und Rp(630) kleiner als 3 % ist, wobei Rp(460) für einen Reflexionsgrad der Glasscheibe für P-polarisiertes Licht von 460 nm steht, Rp(530) für einen Reflexionsgrad der Glasscheibe für P-polarisiertes Licht von 530 nm steht und Rp(630) für einen Reflexionsgrad der Glasscheibe für P-polarisiertes Licht von 630 nm steht.

2. HUD-Scheibe nach Anspruch 1, wobei die transparente Nanobeschichtung (3) eine Dicke im Bereich von 100 nm bis 500 nm aufweist.

3. HUD-Scheibe nach Anspruch 1, wobei ein Verhältnis einer Fläche der transparenten Nanobeschichtung (3) zu einer Fläche der Glasschicht (2) größer oder gleich 70 % ist.

4. HUD-Scheibe nach Anspruch 1, wobei die transparente Nanobeschichtung (3) zumindest fünf dielektrische Schichten und zumindest vier leitende Schichten umfasst und die zumindest fünf dielektrischen Schichten und die zumindest vier leitenden Schichten alternierend gestapelt sind, wobei jede der zumindest vier leitenden Schichten zwischen zwei benachbarten dielektrischen Schichten der zumindest fünf dielektrischen Schichten sandwichartig angeordnet ist.

5. HUD-Scheibe nach Anspruch 4, wobei
eine Gesamtdicke der zumindest vier leitenden Schichten im Bereich von 25 nm bis 40 nm liegt;
die leitende Schicht aus zumindest einem Metall oder einer Metalllegierung besteht; und
das Metall zumindest eines aus Silber (Ag), Kupfer (Cu), Gold (Au), Platin (Pt), Nickel (Ni), Chrom (Cr), Titan (Ti), Aluminium (Al), Indium (In), Zink (Zn) oder Zinn (Sn) ist und die Metalllegierung aus zumindest einem aus Ag, Cu, Au, Pt, Ni, Cr, Ti, Al, In, Zn oder Sn besteht.

6. HUD-Scheibe nach Anspruch 4, wobei jede der zumindest drei leitenden Schichten in den zumindest vier leitenden Schichten eine Dicke von größer oder gleich 4 nm aufweist.

7. HUD-Scheibe nach Anspruch 4, wobei zumindest eine leitende Schicht in den zumindest vier leitenden Schichten eine Mindestdicke aufweist, zumindest eine leitende Schicht in den zumindest vier leitenden Schichten eine Maximaldicke aufweist, und wobei die Maximaldicke größer oder gleich dem Doppelten der Mindestdicke ist.

8. HUD-Scheibe nach Anspruch 7, wobei die Mindestdicke größer oder gleich dem 0,1-Fachen einer Gesamtdicke der zumindest vier leitenden Schichten ist.

9. HUD-Scheibe nach Anspruch 7, wobei die Maximaldicke im Bereich von 10 nm bis 16 nm liegt.

10. HUD-Scheibe nach Anspruch 4, wobei jede der zumindest drei dielektrischen Schichten in den zumindest fünf dielektrischen Schichten eine Dicke von größer oder gleich 50 nm aufweist.

11. HUD-Scheibe nach Anspruch 1, wobei die Glasscheibe einen maximalen Reflexionsgrad *Rmax;* einen minimalen Reflexionsgrad *Rmin* und einen mittleren Reflexionsgrad *Ravg* für P-polarisiertes Licht in einem Wellenlängenbereich von 460 nm ~ 630 nm aufweist, wobei *Rmax - Ravg* ≤ *5* % ist und *Ravg - Rmin* ≤ 5 % ist.

12. HUD-Scheibe nach Anspruch 1, wobei die Glasscheibe ferner eine erste Sammelschiene und eine zweite Sammelschiene umfasst, die beide elektrisch mit der transparenten Nanobeschichtung (3) verbunden sind, und die transparente Nanobeschichtung (3) eine Heizleistungsdichte von zumindest 500 W/m² zwischen der ersten Sammelschiene und der zweiten Sammelschiene aufweist.

13. HUD-Scheibe nach Anspruch 5, wobei
die transparente Nanobeschichtung (3) fünf dielektrische Schichten und vier leitende Schichten umfasst,
wobei die fünf dielektrischen Schichten und die vier leitenden Schichten wie folgt angeordnet sind: eine erste dielektrische Schicht, eine erste leitende Schicht, eine zweite dielektrische Schicht, eine zweite leitende Schicht, eine dritte dielektrische Schicht, eine dritte leitende Schicht, eine vierte dielektrische Schicht, eine vierte leitende Schicht und eine fünfte dielektrische Schicht nacheinander gestapelt sind; und
zumindest eine aus der ersten leitenden Schicht, der dritten leitenden Schicht oder der vierten leitenden Schicht eine Dicke im Bereich von 10 nm bis 16 nm aufweist.

14. HUD-Scheibe nach Anspruch 5, wobei
die transparente Nanobeschichtung (3) sechs dielektrische Schichten und fünf leitende Schichten umfasst, wobei die sechs dielektrischen Schichten und die fünf leitenden Schichten wie folgt angeordnet sind: eine erste dielektrische Schicht, eine erste leitende Schicht, eine zweite dielektrische Schicht, eine zweite leitende Schicht, eine dritte dielektrische Schicht, eine dritte leitende Schicht, eine vierte dielektrische Schicht, eine vierte leitende Schicht, eine fünfte dielektrische Schicht, eine fünfte leitende Schicht und eine sechste dielektrische Schicht nacheinander gestapelt sind; und
zumindest eine aus der ersten leitenden Schicht, der dritten leitenden Schicht oder der fünften leitenden Schicht eine Dicke im Bereich von 10 nm bis 16 nm aufweist.

15. Fahrzeug, umfassend einen Fahrzeugkörper und eine HUD-Scheibe nach einem der Ansprüche 1 bis 14, wobei die Glasscheibe an dem Fahrzeugkörper angebracht ist und der Projektor (1) innerhalb des Fahrzeugkörpers angeordnet ist.

## Revendications

1. Fenêtre d'affichage tête haute, HUD, comprenant une vitre de fenêtre et un projecteur (1), dans laquelle
la vitre de fenêtre comprend une couche de verre (2) et un nano-revêtement transparent (3), le nano-revêtement transparent (3) est disposé sur la couche de verre (2), et le projecteur (1) est configuré pour générer et projeter un rayon de lumière de projection (11) sur la vitre de fenêtre pour former une image de projection ;
une proportion de lumière polarisée P dans le rayon de lumière de projection (11) est supérieure ou égale à 70 %, et le nano-revêtement transparent (3) est capable de réfléchir au moins une partie de la lumière polarisée P incidente sur la vitre de fenêtre ;
la vitre de fenêtre présente une transmittance de lumière visible supérieure ou égale à 70 %, et la vitre de fenêtre présente une transmittance d'énergie solaire totale inférieure ou égale à 50 % ;
le rayon de lumière de projection (11) est projeté sur la vitre de fenêtre selon un angle d'incidence compris entre 40° et 75°, et la vitre de fenêtre présente une réflectivité pour la lumière polarisée P supérieure ou égale à 10 % ; **caractérisé en ce que**
une différence entre deux quelconques parmi Rp(460), Rp(530) et Rp(630) est inférieure à 3 %, dans laquelle Rp(460) représente une réflectivité de la vitre de fenêtre pour une lumière polarisée P de 460 nm, Rp(530) représente une réflectivité de la vitre de fenêtre pour une lumière polarisée P de 530 nm, et Rp(630) représente une réflectivité de la vitre de fenêtre pour une lumière polarisée P de 630 nm.

2. Fenêtre HUD selon la revendication 1, dans laquelle le nano-revêtement transparent (3) présente une épaisseur allant de 100 nm à 500 nm.

3. Fenêtre HUD selon la revendication 1, dans laquelle un rapport d'une aire du nano-revêtement transparent (3) à une aire de la couche de verre (2) est supérieur ou égal à 70 %.

4. Fenêtre HUD selon la revendication 1, dans laquelle le nano-revêtement transparent (3) comprend au moins cinq couches diélectriques et au moins quatre couches conductrices, et les au moins cinq couches diélectriques et les au moins quatre couches conductrices sont empilées en alternance, dans laquelle chacune des au moins quatre couches conductrices est enserrée entre deux couches diélectriques adjacentes des au moins cinq couches diélectriques.

5. Fenêtre HUD selon la revendication 4, dans laquelle
une épaisseur totale des au moins quatre couches conductrices est comprise entre 25 nm et 40 nm ;
la couche conductrice est constituée d'au moins un parmi un métal ou un alliage métallique ; et
le métal est au moins un parmi l'argent (Ag), le cuivre (Cu), l'or (Au), le platine (Pt), le nickel (Ni), le chrome (Cr), le titane (Ti), l'aluminium (Al), l'indium (In), le zinc (Zn), ou l'étain (Sn), et l'alliage de métal est constitué d'au moins un parmi Ag, Cu, Au, Pt, Ni, Cr, Ti, Al, In, Zn, ou Sn.

6. Fenêtre HUD selon la revendication 4, dans laquelle chacune d'au moins trois couches conductrices dans les au moins quatre couches conductrices présente une épaisseur supérieure ou égale à 4 nm.

7. Fenêtre HUD selon la revendication 4, dans laquelle au moins une couche conductrice dans les au moins quatre couches conductrices présente une épaisseur minimale, au moins une couche conductrice dans les au moins quatre couches conductrices présente une épaisseur maximale, et l'épaisseur maximale est supérieure ou égale à deux fois l'épaisseur minimale.

8. Fenêtre HUD selon la revendication 7, dans laquelle l'épaisseur minimale est supérieure ou égale à 0,1 fois une épaisseur totale des au moins quatre couches conductrices.

9. Fenêtre HUD selon la revendication 7, dans laquelle l'épaisseur maximale est comprise entre 10 nm et 16 nm.

10. Fenêtre HUD selon la revendication 4, dans laquelle chacune d'au moins trois couches diélectriques dans les au moins cinq couches diélectriques présente une épaisseur supérieure ou égale à 50 nm.

11. Fenêtre HUD selon la revendication 1, dans laquelle la vitre de fenêtre présente une réflectivité maximale Rmax, une réflectivité minimale Rmin et une réflectivité moyenne Ravg pour une lumière polarisée P dans une plage de longueurs d'onde de 460 nm à 630 nm, dans laquelle *Rmax - Ravg* ≤ 5 % et *Ravg - Rmin* ≤ 5 %.

12. Fenêtre HUD selon la revendication 1, dans laquelle la vitre de fenêtre comprend en outre une première barre omnibus et une seconde barre omnibus qui sont toutes deux connectées électriquement au nano-revêtement transparent (3), et le nano-revêtement transparent (3) présente une densité de puissance de chauffage d'au moins 500 W/m² entre la première barre omnibus et la seconde barre omnibus.

13. Fenêtre HUD selon la revendication 5, dans laquelle
le nano-revêtement transparent (3) comprend cinq couches diélectriques et quatre couches conductrices, dans lequel les cinq couches diélectriques et les quatre couches conductrices sont agencées de la manière suivante : une première couche diélectrique, une première couche conductrice, une deuxième couche diélectrique, une deuxième couche conductrice, une troisième couche diélectrique, une troisième couche conductrice, une quatrième couche diélectrique, une quatrième couche conductrice et une cinquième couche diélectrique sont empilées en séquence ; et
au moins l'une de la première couche conductrice, de la troisième couche conductrice ou de la quatrième couche conductrice présente une épaisseur allant de 10 nm à 16 nm.

14. Fenêtre HUD selon la revendication 5, dans laquelle
le nano-revêtement transparent (3) comprend six couches diélectriques et cinq couches conductrices, les six couches diélectriques et les cinq couches conductrices sont agencées de la manière suivante : une première couche diélectrique, une première couche conductrice, une deuxième couche diélectrique, une deuxième couche conductrice, une troisième couche diélectrique, une troisième couche conductrice, une quatrième couche diélectrique, une quatrième couche conductrice, une cinquième couche diélectrique, une cinquième couche conductrice et une sixième couche diélectrique sont empilées en séquence ; et
au moins l'une de la première couche conductrice, de la troisième couche conductrice ou de la cinquième couche conductrice présente une épaisseur allant de 10 nm à 16 nm.

15. Véhicule, comprenant une carrosserie de véhicule et la fenêtre HUD selon l'une quelconque des revendications 1 à 14, dans lequel la vitre de fenêtre est montée sur la carrosserie de véhicule, et le projecteur (1) est situé à l'intérieur de la carrosserie de véhicule.
